Europäisches Patentamt

(19) European Patent Office

Office européen des brevets

(11) Publication number: **0 019 448**
A1

# (12) EUROPEAN PATENT APPLICATION

(21) Application number: 80301555.1

(22) Date of filing: 13.05.80

(51) Int. Cl.³: **A 63 H 30/04**

(30) Priority: 14.05.79 US 38528

(43) Date of publication of application:
26.11.80 Bulletin 80/24

(84) Designated Contracting States:
FR GB IT

(71) Applicant: Calvin, Noel Morgen
2683 Buena Vista Way
Berkeley, California 94708(US)

(72) Inventor: Calvin, Noel Morgen
2683 Buena Vista Way
Berkeley, California 94708(US)

(74) Representative: Potter, Willoughby Whatnall et al,
ERIC POTTER & CLARKSON 14 Oxford Street
Nottingham NG1 5BP(GB)

(54) Method and apparatus for controlling the speed and direction of a vehicle.

(57) Method and apparatus for controlling the speed and direction of a toy vehicle by radio, including two motors (10,11) each connected to a separate drive wheel (2, 3) the vehicle including one or more pivot wheels (13), such that the speed and direction of the vehicle is proportional to the relative speeds of said motors (10, 11), and radio frequency transmitting and receiving means such that the speeds of said motors (10, 11) required to produce a desired movement are encoded onto a transmitted signal, decoded by said receiving means, and applied to said motors (10, 11).

./...

Fig.1

0019448

RADIO CONTROLLED VEHICLE

The present invention relates to toy vehicles and more particularly to toy vehicles controlled remotely by radio frequency transmissions. The term radio used hereinafter is to be construed as including other equivalent transmissions such as ultrasonics which may be modulated in a similar manner to provide control signals.

Early radio controlled toy vehicles were provided with valve operated receivers which necessitated them being fairly heavy and large - up to 12 inches long to accommodate the valves and batteries.

The invention of the transistor resulted in a considerable reduction in both the size of the receiver and batteries. Such reductions enabled the vehicles to be smaller and go faster.

A further step came with the introduction of the proportional or servo control system enabling complete steering control of the vehicles making them more realistic than previous vehicles in which only maximum turn on speed was obtainable.

The disadvantage of the servo control system is that as the degree of control increased so did the complexity of the control circuitry and servo mechanism. Thus the minimum size of vehicle was still of the order of 6 inches and the costs were high. It is an object of the present invention to provide a method and apparatus to remotely control a vehicle of the order of dimension of 2 inches.

The method and apparatus involves the independent control of the speed of two drive motors in the toy, each connected to a separate drive wheel. The speed of the toy is determined by the average speed of both drive wheels, and the direction - i.e., turning radius - is determined by the ratio of the speeds of the drive wheels. The toy may have any number of extra support wheels, each of which must be free to swivel.

The method includes the steps of: converting two independent inputs, one for speed and one for direction, into two control signals corresponding to the speed of the two motors required to produce the desired motion in the toy; encoding the two control signals into a single pulse width signal; modulating the output of a transmitter with said coded signal; receiving the transmitted signal; decoding the received signal to regenerate the control signals for the two drive motors; and applying said control signals to the motors to produce the desired motion in the toy.

The control signals generated for the motors are digital in nature, the speed of the motor being determined by the duty cycle of the control signal. A duty cycle of 0% corresponds to a full halt, and a duty cycle of 100% corresponds to maximum speed. This method offers the triple advantages of maintaining the torque of the motor at low speeds; more efficient application of power to the motors, eliminating thermal waste in a resistive control element and prolonging battery life; and enabling the receiver and motors to operate from power supplies as low as 1 volt, making operation from a single battery possible.

The motor control signals are encoded in the modulation signal as follows: a high frequency signal with approximately 50% duty cycle turns neither motor on; superimposing a train of positive pulses on the high frequency with a width several times the period of high frequency turns one motor on; superimposing a train of negative pulses turns the other motor on; and alternately superimposing positive and negative pulses turns both motors on. This has the advantage that noise generated by the motors is interpreted as a high frequency and both motors turn off. Thus, if the toy is driven so far from the transmitter that the motor noise begins to interfere with reception, the toy will slow and eventually stop. The inherent resistance to electrical noise allows the receiver to be operated from the same battery as the motors, and in close proximity to the motors, without the need for noise filter or shielding.

The frequency/pulse width coding method also has the advantage that the circuitry needed to decode the signal and regenerate the motor control signals is very simple, allowing the receiver to be made very small.

Embodiments of the present invention will now be described by way of example with reference to the accompanying drawings in which :-

Figure 1 is a drawing showing the arrangement of the mechanical parts of a preferred embodiment of a toy car;

Figure 2 is a block diagram of the circuitry of the preferred embodiment;

Figure 3 is a schematic diagram of the transmitter;

Figure 4 shows the waveforms associated with the Pulse Width Encoder;

Figure 5 shows the waveforms associated with the Modulation Encoder;

Figure 6 is a schematic diagram of the receiver;

Figure 7 shows the waveforms associated with the Left Decoder; and

Figure 8 shows the waveforms associated with the Right Decoder.

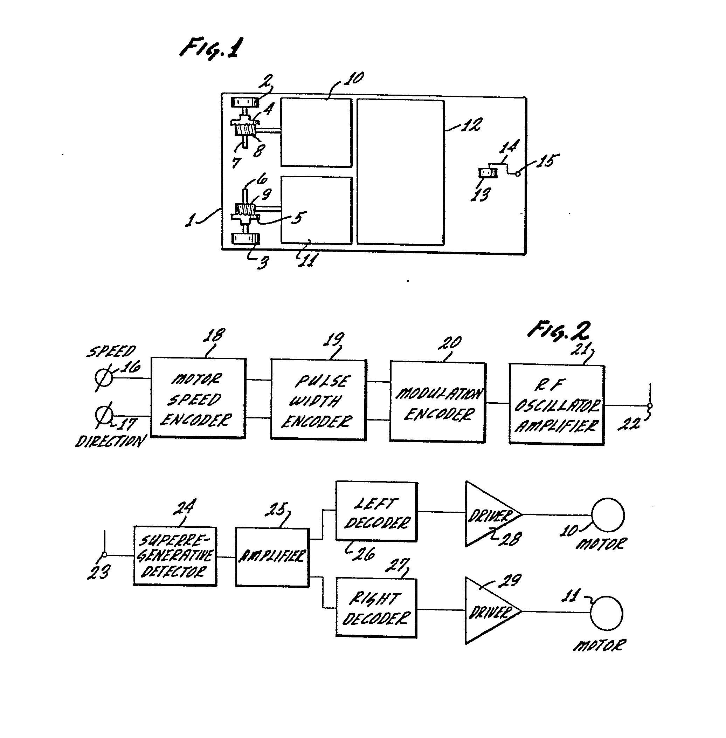

A diagram showing the arrangement of mechanical parts in the car body of the preferred embodiment is shown in Figure 1. Power from motors 10 and 11 is coupled to drive wheels 2 and 3 by worm gears 8 and 9, pinion gears 4 and 5, and axles 6 and 7. Front wheel 13 is mounted on trailing arm 14, which is free to move in pivot 15. The receiver circuitry and battery are mounted in area 12, and all parts are rigidly mounted on chassis 1. A battery

-4-

(not shown) provides power for the vehicle.

The receiver provides for independent control of the speed of each motor. If both motors are operating at the same speed, the car will move forward in a straight line with a speed determined by the speed of the motors. If one motor is turning slower than the other, a torque will be generated that tends to twist the car toward the side of the slower motor. The front wheel 13 will pivot and the car will accordingly start to turn. If the left motor is slower, the car will turn to the left; if the right motor is slower, it will turn to the right. Any turning radius up to pivoting around a stationary wheel can be obtained by adjusting the relative speeds of the two motors.

A block diagram of the preferred embodiment of the invention is shown in Figure 2. The transmitter section is comprised of a speed control 16, a steering control 17, a motor speed encoder 18, a pulse width encoder 19, a modulation encoder 20, an RF oscillator/amplifier 21, and an antenna 22. The receiving section is comprised of an antenna 23, a receiver 24, an amplifier 25, left and right decoders 26 and 27, left and right drivers 28 and 29, and left and right motors 10 and 11.

The desired speed and direction are set on the speed and steering controls 16 and 17. The motor speed encoder generates two voltages proportional to the speeds of the left and right motors required to produce the desired movement. For example, full speed straight ahead requires that both motors operate at maximum speed, and accordingly both left and right control voltages will be maximum. A gentle turn to the right at high speed requires that the left motor be running at maximum speed while the right motor runs slowly; the right motor control voltage will therefore be about half maximum while the left is at maximum.

The outputs of the motor speed encoder are fed into the pulse width encoder, which generates two low frequency motor control pulse trains the duty cycle of which is proportional to the voltage of the corresponding output of the speed encoder. A maximum control voltage will result in a 100% duty cycle, half maximum will yield a 50% duty cycle, zero will give 0% duty cycle, and so forth. It will be seen that if the outputs of the pulse width encoder were used to drive the motors directly, the power applied to each motor - and hence its speed- would be proportional to the duty cycle of the pulse train, which is itself proportional to the output voltages of the speed encoder, which represent the desired motor speeds for the selected motion. This is essentially what happens, except that instead of a direct connection the pulse trains are encoded on to a transmitted signal, received, decoded, and then applied to the motors.

The outputs of the pulse width encoder are fed into modulation encoder which generates a single modulation signal into which both pulse trains have been simultaneously encoded. When the duty cycle of both motor control pulse trains is zero the modulation signal is a square wave with a frequency much greater than that of the motor control pulses. During the high level of the left motor control pulse the modulation signal is held low for 4 consecutive cycles out of every 16 cycles. During the high level of the right motor control pulse the modulation signal is held high for 4 consecutive cycles out of every 16. When both motor control pulses are high, the modulation signal is held low for 4 cycles, oscillates for 4 cycles, is held high for 4 cycles, oscillates for 4 cycles, and starts over again.

The modulation signal is fed into the RF oscillator/amplifier, whose output is fed into the transmitting antenna.

The transmitted signal is picked up by the receiving antenna, amplified and detected by the receiver 24,

0019448

-6-

whose output is a replica of the modulation signal.

The output of the receiver is fed into the amplifier, whose outputs are fed into the left and right decoders. The outputs of both decoders remain low as long as the modulation signal is a continuous high frequency. When the modulation signal goes high for 4 cycles the output of the right decoder goes high for a time longer than 16 cycles of the modulation signal; when it goes low for 4 cycles the output of the left decoder goes high. The outputs of the decoders thus are a replica of the output of the pulse width encoder.

The outputs of the decoders are fed into the drivers, which in turn apply current to the motors, producing motion in accordance with the setting of the speed and direction controls.

The schematic diagram of the preferred embodiment of the transmitter is shown in Figure 3, divided into sections corresponding to the functional blocks shown in Figure 2.

The motor speed encoder 18 is comprised of speed control potentiometer 16, direction control potentiometer 17, and resistors 30 and 31. Resistors 30 and 31, and potentiometer 17 are connected as a bridge type voltage divider. The input voltage to the bridge is set by the speed control potentiometer, and the balance is set by the steering control. Increasing the setting of the speed control increases the output voltage at both the right and left motor control outputs. If the steering control is centered for motion straight ahead both outputs are equal. If the steering control is moved to the left, the left motor control voltage decreases, and the right motor control voltage increases; when the control voltages are ultimately translated into motor speeds the car will respond by turning left. Turning the steering control to the right causes the left motor control voltage to increase and the right motor control voltage to decrease, ultimately resulting in a right turn. The tightness of the turn is proportional to the ratio of the speeds of the left and right motors, and any turning radius from a gentle curve to pivoting around a stationary drive wheel can be obtained by the appropriate setting of the steering control.

Referring again to Figure 3, the pulse width encoder is composed of a standard timing circuit 35 and voltage comparators 32 and 33. Timer 35 is connected in the astable mode such that it produces a sawtooth output across capacitor 36. The frequency of the sawtooth is set by resistor 34 and capacitor 36, while resistor 37 and capacitor 38 delay the retriggering of the timer to insure that the sawtooth voltage returns to zero at the end of each cycle.

The output of each comparator goes high when the sawtooth voltage is lower than the associated motor control voltage. The duty cycle of the output of each comparator will thus vary from zero to 100% as the motor control voltage varies from zero to the peak level of the sawtooth. The wave forms associated with the pulse width encoder are illustrated in Figure 4.

Both outputs of the pulse width encoder are fed into the modulation encoder 20, which consists of CMOS inverters 42, 43, 44 and 50, CMOS 3-input NAND gates 49 and 48, CMOS 2-input NAND gates 46 and 47, and CMOS 4 bit counter 45.

Invertors 42, 43 and 44 are connected as an oscillator whose frequency is set by resistors 39 and 41 and capacitor 40. The output of the oscillator is fed into counter 45 whose outputs Q3 and Q4 are respectively 1/8 and 1/16 the oscillator frequency. NAND gates 49 and 48 are connected as gated decoders. The output of NAND gate 49 will go low during counter states 12, 13, 14, and 15 only when the left motor control is high. The output of NAND

-8-

gate 48 will go low during counter states 4, 5, 6, and 7 only when the right motor control is high.

NAND gates 47 and 46 are connected to provide, respectively, negative and positive gating of the oscillator signal. When the output of NAND gate 49 is low the output of NAND gate 46 is forced high, and the output of NAND gate 47 is forced low. When the output of NAND gate 48 goes low, the output of NAND gate 47 is forced high. Since the outputs of gates 48 and 49 go low during different counter states there can be no interference between them.

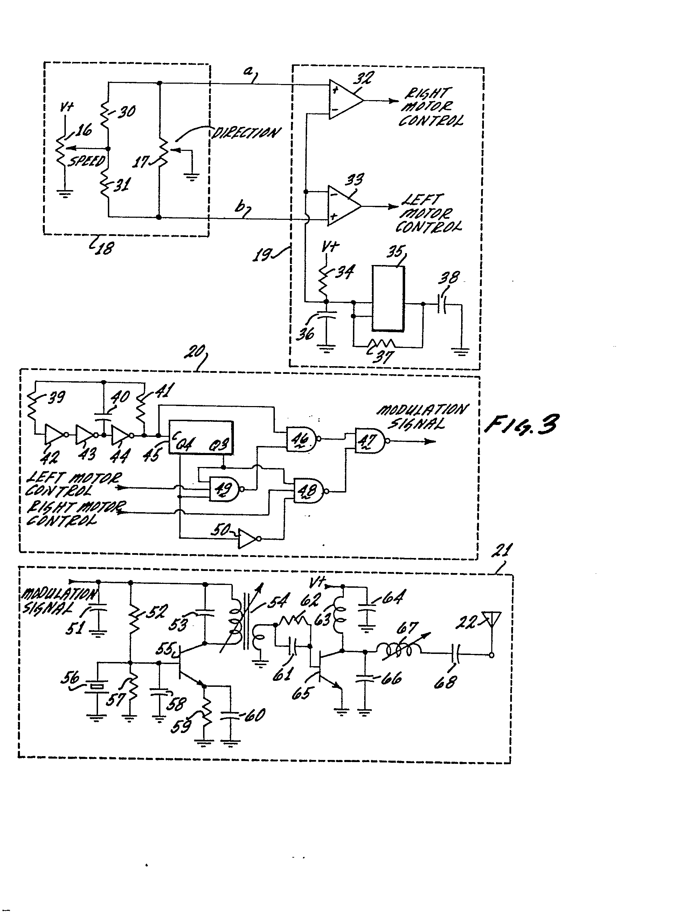

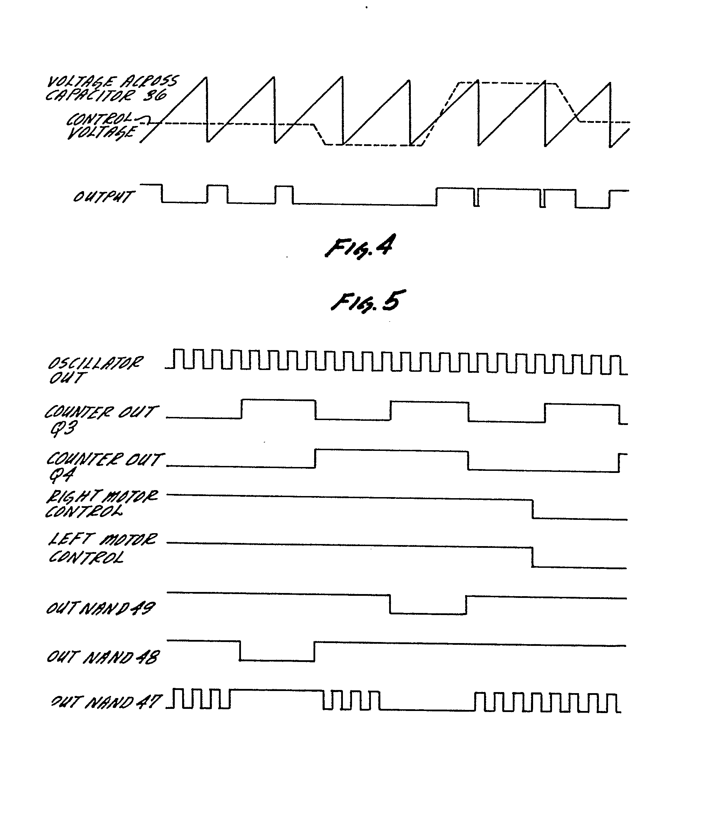

The oscillator frequency is chosen to be about 500 times the motor control pulse repetition frequency. When the left motor control is high, the output of the modulation encoder will remain low for 4 out of every 16 cycles. When the right motor control is high, the output of the modulation encoder will remain high for 4 out of every 16 cycles. When both motor control lines are high, the output will remain low for 4 cycles, oscillate for 4 cycles, remain high for 4 cycles, oscillate for 4 cycles, and then start over. These waveforms are shown in Figure 5.

It will be noted that the average duty cycle of the modulation signal is never less than 40%, and never more than 60%, and it approaches these extremes only during very sharp turns. This greatly simplifies the design of the receiver circuit and increases noise immunity of the receiver.

Referring again to Figure 3, the oscillator/ amplifier is built around transistors 55 and 65. Transistor 55 is connected as a tuned collector crystal oscillator which is gated by the output of the modulation encoder. Resistors 52 and 57 set the bias on the transistor and resistor 59 sets the collector current. Capacitor 58 loads crystal 56, and capacitors 51 and 60 provide RF bypassing. Transformer 54 and capacitor 53 form a tank circuit tuned to the crystal frequency. Coupling to amplifier transistor 65 is through the secondary of the transformer. Resistor 62 limits the average base current while capacitor 61 provides RF coupling. Power to the amplifier is drawn through RF choke 63, bypassed by capacitor 64. The signal is coupled to antenna 22 through a pi section formed by inductor 67, and capacitors 66 and 68.

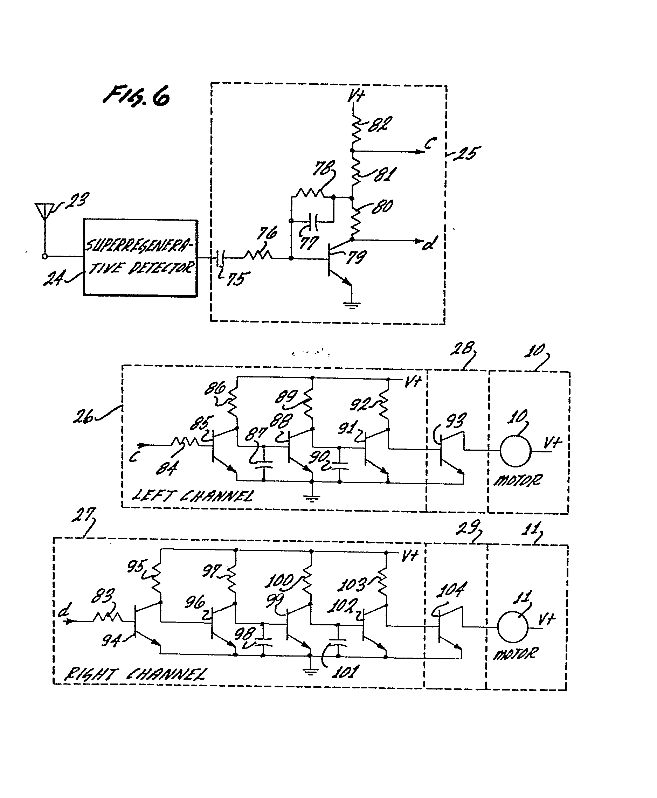

The schematic diagram of the preferred embodiment of the receiver is shown in Figure 6, divided into the functional sections of super regenerative detector 24, amplifier 25, left and right decoders 26 and 27, and left and right drivers 28 and 29.

The super regenerative detector is tuned to the transmitter frequency and provided with whatever gain is necessary such that it produces a demodulated output of at least 50 mv at the maximum range from the transmitter at which operation is required.

The output of the detector is fed into amplifier 25, formed by transistor 79, the outputs of which are fed into the right and left decoder circuits, formed respectively by transistors 94, 96, 99, and 102, and transistors 85, 88 and 91.

Transistor 79 is connected as an inverting amplifier, with the gain set by resistors 76 and 78, and the upper and lower frequency response cut-off points set by capacitors 77 and 75 respectively. Collector load resistor 82 and resistors 81 and 80 form a voltage divider such that the output of the amplifier at points a and b has a dc offset respectively above and below the base emitter threshold voltage of transistors 85 and 94.

When the super regenerative detector receives no signal, nothing will be fed into transistor 79, and no AC signal will be present at the outputs. Transistor 85 will therefore be turned on, discharging capacitor 87. Transistor 94 will be cut off, causing transistor 96 to turn on, discharging capacitor 98.

When the super regenerative detector picks up a signal from the transmitter, a replica of the output of the modulation encoder will appear at the collector of transistor 79. During the positive half-cycle of this signal transistor 85 will turn on, discharging capacitor 87. During the negative half cycle transistor 85 will be cut off, allowing capacitor 87 to charge through resistor 86. The time constant of capacitor 87 and resistor 86 is chosen such that during the negative half-cycle of the fundamental modulation frequency capacitor 87 does not have time to charge to a voltage sufficient to turn transistor 88 on. Transistor 88 thus remains off, and capacitor 90 charges through resistor 89 until transistor 91 turns on, diverting current from the base of driver transistor 93 so that no power is applied to motor 10.

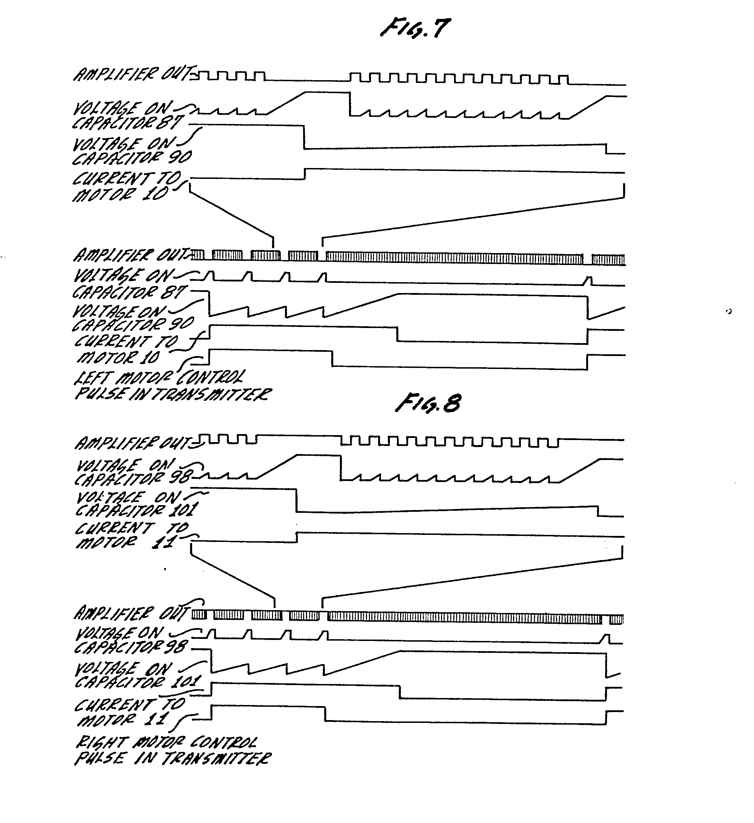

During the high section of the left motor control pulse the modulation signal is held low for 4 consecutive cycles out of every 16; during these four cycles capacitor 87 can charge to a voltage sufficient to turn transistor 88 on; discharging capacitor 90. This turns off transistor 91, which allows current to flow through resistor 92 into the base of transistor 93, applying power to motor 10. The time constant of capacitor 90 and resistor 89 is chosen to be just longer than 16 cycles of the modulator oscillator, so that power is continuously applied to the motor during the motor control pulse, but is removed quickly after the pulse. Power is thus applied to the motor in a replica of the motor control pulse. The associated waveforms are shown in Figure 7.

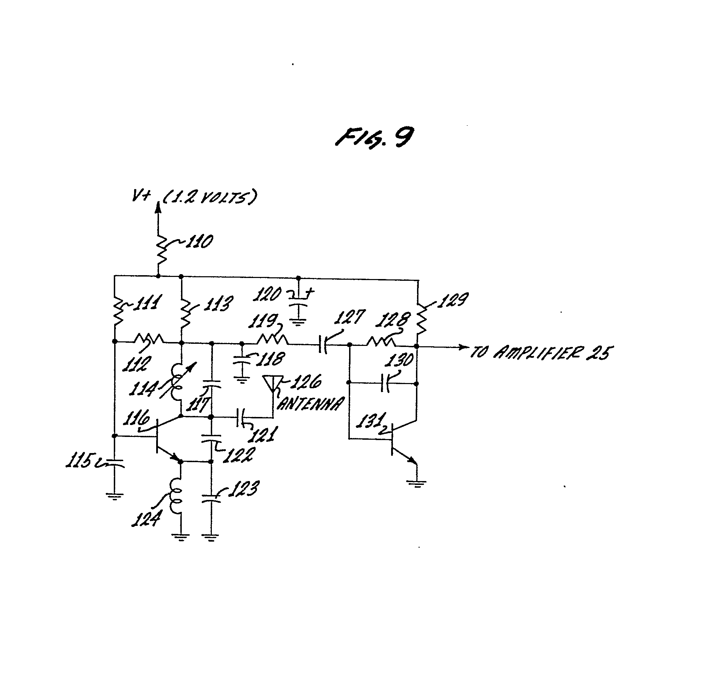

The operation of the right decoder is identical, except that the modulation signal is inverted by transistor 94, and the decoder therefore responds to the right motor control pulse, which causes the modulation signal to go high for 4 consecutive cycles out of 16. Power is applied to the right motor in a replica of the right motor control pulse. The associated waveforms are shown in Figure 8.

-11-

It will be seen that power is applied to both left and right motors in pulses corresponding to the associated motor control pulses. The speed of each motor will therefore be proportional to the duty cycle of each motor control pulse, which in turn is proportional to the corresponding motor control voltage. Since the motor control voltages represent the motor speeds required to produce the desired motion, the car will accordingly move with the speed and direction set on the speed and direction controls.

CLAIMS

1.    An apparatus for controlling the speed and direction of a vehicle comprising in combination left motor means and right motor means coupled, respectively, to left and right tractor tread means, or to left and right drive wheel means arranged such that the speed and direction of said vehicle is determined by the absolute and relative speeds of said left and right motor means.

2.    An apparatus as in Claim 1 wherein the speeds of said left and right motor means are controlled remotely by radio transmitting and receiving means and wherein said transmitting means comprises in combination:  speed control means and direction control means whereby the desired speed and direction of the vehicle are set; motor speed encoder means wherein the speeds of the left and right motor means required to produce the desired motion is generated; modulation encoder means wherein the two required motor speeds are encoded into a single modulation signal; and radio frequency oscillator and amplifier means whereby an RF signal amplitude modulated by said modulation signal is generated, amplified, and coupled to an antenna, and wherein said receiving means comprises in combination:  antenna and detection means for picking up, amplifying and demodulating the output of said transmitting means; decoder means for regenerating the required speeds of said left and right motor means; and drive means for applying power to said left and right motor means in accordance with the output of said decoder means.

3.    An apparatus as in Claim 2 wherein said speed control means and said direction control means are potentiometers, and wherein said motor speed encoder means is comprised of said speed control potentiometer connected as a voltage divider so as to produce a voltage directly proportional to the desired speed and analog multiplier means wherein said voltage is multiplied by the fractional deviation of the desired steering radius from a straight line to produce one motor control voltage, and wherein said voltage is multiplied  by the inverse of said fractional deviation to produce the other motor control voltage.

4. An apparatus as in Claim 1, wherein power is applied to said left and right motor means as a train of pulses, the duty cycle of said pulses determining the speed of said motor means, such that maximum efficiency and battery life is maintained at all operating speeds.

5. An apparatus as in Claim 2 wherein the output of said motor speed encoder is fed into pulse width encoder means such that a left motor control signal pulse train and a right motor control signal pulse train are produced, the duty cycle of each of which is proportional to the corresponding motor control voltage output of the motor speed encoder, the two pulse trains being fed into said modulation encoder means.

6. An apparatus as in Claim 5 wherein said modulation encoder means generates a modulation signal corresponding to the states of said motor control signals such that when neither control signal is high a fundamental high frequency modulation signal with about a 50% duty cycle is generated; when the left motor control signal is high negative pulses of a width several times the period of the fundamental frequency are interspersed with, or superimposed on the fundamental signal; when the right motor control signal is high, positive pulses of a width several times the period of the fundamental frequency are interspersed with, or superimposed on the fundamental signal; and when both motor control signals are high both positive and negative pulses are produced, timed such that the positive and negative pulses never overlap each other.

7. An apparatus as in Claim 6 wherein said modulation encoder is digital in nature, comprising a 4 bit counter and gating circuitry such that said negative pulse is generated by holding the output of the modulation encoder low for 4 consecutive cycles out of every 16 of the modulation frequency, and said positive pulse is generated by holding the output high for 4 consecutive cycles out of every 16, the gating ensuring that the two sets of 4 cycles are not overlapping.

8. An apparatus as in Claim 2 wherein the decoder means of the receiver comprises in combination: Left decoder means comprised of primary timer means and secondary timer means such tht said primary timer detects negative pulses in the transmitted signal when the output signal of the receiver detector goes low for a period longer than about twice the period of the fundamental modulation signal and responds by triggering the secondary timer, whose output will remain high for a timing interval slightly longer than the time between said negative pulses, and which will restart said timing interval every time a negative pulse is detected so that its output will remain continuously high so long as negative pulses are present and will go low one timing interval after they cease, and will therefore be a close replica of the left motor control signal; and right decoder means comprised of primary timer means and secondary timer means which functions in a manner identical to the left decoder means except that it detects positive pulses in the transmitted signal rather than negative.

9. An apparatus as in Claim 8 wherein threshold detector means is included such that when the output of said receiver detector means is of an amplitude insufficient for proper operation of said left and right decoder means, said decoder means are inactivated.

10. An apparatus as claimed in Claim 1 in which the vehicle includes one or more free wheeling pivoting wheel means.

11. A method for controlling the speed and direction of a vehicle as claimed in Claim 1, comprising in combination the steps of: independently controlling the speed of two tractor treads or drive wheels; allowing all other wheels, if any, on the vehicle to pivot in response to a torque generated by a difference between the speeds of said drive wheels or treads, such that the speed and direction of said vehicle is entirely determined by the absolute and relative speeds of said drive wheels or treads.

12.    A method as in Claim 11 wherein said control of the speed and direction of the vehicle is accomplished remotely by radio comprising in combination the steps of:  converting the desired speed and direction of the vehicle into electronic signals corresponding to the speed of the two drive wheels necessary to produce said motion; encoding said electronic signal into a transmitted signal; receiving said signal by a receiver located on the vehicle; decoding said received signal to reproduce said electronic signals corresponding to the required speeds of the drive wheels; and applying said electronic signals to motors connected to the drive wheels to produce the desired motion.

**FIG.1**

**FIG.2**

0019448

2/6

FIG.3

Fig.4

Fig.5

Fig. 6

## FIG. 7

AMPLIFIER OUT

VOLTAGE ON CAPACITOR 87

VOLTAGE ON CAPACITOR 90

CURRENT TO MOTOR 10

AMPLIFIER OUT

VOLTAGE ON CAPACITOR 87

VOLTAGE ON CAPACITOR 90

CURRENT TO MOTOR 10

LEFT MOTOR CONTROL PULSE IN TRANSMITTER

## FIG. 8

AMPLIFIER OUT

VOLTAGE ON CAPACITOR 98

VOLTAGE ON CAPACITOR 101

CURRENT TO MOTOR 11

AMPLIFIER OUT

VOLTAGE ON CAPACITOR 98

VOLTAGE ON CAPACITOR 101

CURRENT TO MOTOR 11

RIGHT MOTOR CONTROL PULSE IN TRANSMITTER

FIG. 9

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | FR - A - 2 387 066 (MABUCHI MOTOR CO., LTD.)<br><br>  * Figures 1,2,4A; page 1, lines 1-10; page 2, lines 7-15; page 3, lines 5-30; page 4, line 40 - page 7, line 5 *<br><br>-- | 1-4,10-12 | A 63 H 30/04 |
| | GB - A - 1 262 647 (GEORGE RICHARDS & COMPANY LIMITED)<br><br>  * Figures; page 2, line 18 - page 3, line 80 *<br><br>-- | 1-3 | |
| | FR - A - 2 236 237 (NIKKO CO., LTD.)<br><br>  * Figures 1,2,7,8; page 3, line 5 - page 4, line 3; page 4, line 22 - page 5, line 37 *<br><br>-- | 1-3,10-12 | TECHNICAL FIELDS SEARCHED (Int.Cl. 3)<br><br>A 63 H<br>G 08 C |
| A | FR - A - 1 538 108 (PEREZ NAZABAL)<br><br>---- | 1 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 12-08-1980 | HERBELET |

EPO Form 1503.1   06.78